(19) **Europäisches Patentamt / European Patent Office / Office européen des brevets**

(11) **EP 3 346 282 B1**

(12) **FASCICULE DE BREVET EUROPÉEN**

(45) Date de publication et mention
de la délivrance du brevet:
**26.04.2023  Bulletin 2023/17**

(21) Numéro de dépôt: **18150398.8**

(22) Date de dépôt: **05.01.2018**

(51) Classification Internationale des Brevets (IPC):
**G01S 1/16** *(2006.01)*     **G01S 1/02** *(2010.01)*
**G01S 19/15** *(2010.01)*

(52) Classification Coopérative des Brevets (CPC):
**G05D 1/101; G01S 1/026; G01S 1/16; G01S 19/15**

(54) **DISPOSITIF ÉLECTRONIQUE DE SURVEILLANCE D'AU MOINS UN SIGNAL DE RADIONAVIGATION EN PHASE D'APPROCHE D'UNE PISTE D'ATTERRISSAGE, PROCÉDÉ DE SURVEILLANCE ET PROGRAMME D'ORDINATEUR ASSOCIÉS**

ELEKTRONISCHE VORRICHTUNG ZUR ÜBERWACHUNG MINDESTENS EINES SATELLITENNAVIGATIONSSIGNALS IN DER ANNÄHERUNGSPHASE AN EINE LANDEBAHN, ENTSPRECHENDES ÜBERWACHUNGSVERFAHREN UND ENTSPRECHENDES COMPUTERPROGRAMM

ELECTRONIC MONITORING DEVICE FOR MONITORING AT LEAST ONE RADIONAVIGATION SIGNAL DURING AN APPROACH PHASE TO A LANDING RUNWAY, RELATED MONITORING METHOD AND COMPUTER PROGRAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.01.2017  FR 1700011**

(43) Date de publication de la demande:
**11.07.2018  Bulletin 2018/28**

(73) Titulaire: **Thales**
**92400 Courbevoie (FR)**

(72) Inventeur: **ARETHENS, Jean-Pierre**
**26000 VALENCE (FR)**

(74) Mandataire: **Lavoix**
**2, place d'Estienne d'Orves**
**75441 Paris Cedex 09 (FR)**

(56) Documents cités:
**EP-A1- 1 589 351     EP-A1- 2 927 704**
**EP-B1- 1 589 351     US-B2- 8 630 756**

**Description**

La présente invention concerne un dispositif électronique de surveillance d'au moins un signal de radionavigation en phase d'approche d'une piste d'atterrissage, chaque signal de radionavigation étant issu d'une chaine de réception embarquée à bord d'un aéronef.

Le dispositif de surveillance comprend un module de calcul configuré pour calculer une valeur angulaire de déplacement dans un plan de référence ; un module de comparaison configuré pour comparer la valeur angulaire de déplacement calculée avec le signal de radionavigation correspondant ; et un module d'alerte configuré pour générer un signal d'alerte en fonction du résultat de la comparaison entre la valeur angulaire de déplacement calculée et le signal de radionavigation correspondant.

L'invention concerne également un procédé de surveillance d'au moins un signal de radionavigation en phase d'approche de la piste d'atterrissage.

L'invention concerne également un programme d'ordinateur comportant des instructions logicielles qui, lorsqu'elles sont exécutées par un ordinateur, mettent en oeuvre un tel procédé de surveillance.

L'invention concerne le domaine de la surveillance d'un aéronef lors de sa phase d'approche vers une piste d'atterrissage, en particulier de la surveillance de signaux de radionavigation pour le pilotage automatique à haut niveau de sécurité, requis pour des opérations d'approche et d'atterrissage en condition de visibilité réduite, par exemple en catégorie IIIB selon l'annexe 10 du volume 1 de l'OACI. Ces systèmes de pilotage automatique utilisent également des informations de mesure de vitesse fournies par un équipement IRS (de l'anglais *Inertial référence System*).

Les signaux de radionavigation surveillés sont par exemple des signaux ILS (de l'anglais *Instrument Landing System*), des signaux MLS (de l'anglais *Microwave Landing System*), ou encore des signaux GLS (de l'anglais *GBAS Landing System*, c'est-à-dire *Ground-Based Augmentation System Landing System)*.

On connait du document US 8,630,756 B2 un dispositif électronique de surveillance du type précité. Ce dispositif de surveillance de signaux ILS comprend un module de calcul configuré pour calculer une valeur angulaire de déplacement de l'aéronef dans un plan de référence, à partir d'une information de position d'une balise au sol apte à émettre le signal ILS et d'informations de position de l'aéronef issues d'un récepteur GPS embarqué à bord de l'aéronef.

Ce dispositif de surveillance de signaux ILS comprend en outre un module de comparaison de la valeur angulaire de déplacement calculée à partir de la position de la balise, avec le signal de radionavigation correspondant, et un module d'alerte pour générer un signal d'alerte en fonction du résultat de ladite comparaison.

Toutefois, un tel dispositif de surveillance nécessite de connaitre précisément la position de la balise au sol apte à émettre le signal ILS au travers d'un couplage avec une base de données d'information de navigation, ainsi qu'une position suffisamment précise de l'aéronef fournie par le récepteur GPS,

Le but de l'invention est alors de proposer un dispositif électronique de surveillance qui soit plus facile à mettre en oeuvre, et ne recourt ni à la position de l'aéronef fournie par le récepteur GPS, ni à la position de la balise sol.

A cet effet, l'invention a pour objet un dispositif électronique de surveillance selon la revendication 1.

L'invention a en outre pour objet un dispositif électronique de surveillance selon la revendication 2.

Suivant d'autres aspects avantageux de l'invention, le dispositif électronique de surveillance est selon l'une quelconque des revendications 3 à 7.

L'invention a également pour objet un procédé de surveillance selon la revendication 8.

L'invention a également pour objet un procédé de surveillance selon la revendication 9.

L'invention a également pour objet un programme d'ordinateur selon la revendication 10.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

- la figure 1 est une représentation schématique d'un aéronef lors de la phase d'approche vers une piste d'atterrissage, l'aéronef comprenant plusieurs systèmes avioniques et un dispositif électronique de surveillance d'au moins un signal de radionavigation ;
- la figure 2 est une représentation plus détaillée du dispositif de surveillance de la figure 1 ;
- la figure 3 est une représentation schématique d'un déplacement latéral de l'aéronef dans un plan horizontal ;
- la figure 4 est une représentation schématique d'un déplacement vertical de l'aéronef dans un plan vertical ;
- la figure 5 est un organigramme d'un procédé de surveillance selon l'invention, dans le cas du calcul d'une valeur angulaire de déplacement latéral dans le plan horizontal ;
- la figure 6 est une vue analogue à celle de la figure 5, dans le cas du calcul d'une valeur angulaire de déplacement vertical dans le plan vertical ;
- la figure 7 est une représentation schématique d'une architecture redondante de l'état de la technique, comportant plusieurs systèmes avioniques ;
- la figure 8 est une représentation schématique d'une architecture redondante selon l'invention, comportant plusieurs systèmes avioniques et le dispositif de surveillance de la figure 1, selon une première configuration ; et

- la figure 9 est une vue analogue à celle de la figure 8, selon une deuxième configuration.

De façon conventionnelle dans la présente demande, l'expression « sensiblement égale à » exprimera une relation d'égalité à plus ou moins 10 %, de préférence encore une relation d'égalité à plus ou moins 5 %.

Dans la suite de la description, 1 Ft (de l'anglais *Feet*) désignera 1 pied, égal à 0,3048 mètre, 1 Nm (de l'anglais *Nautical mile*) désignera 1 mile nautique, égal à 1 852 mètres, et 1 Kt (de l'anglais *Knot*) désignera 1 noeud, égal à 1852 m/h, soit 0,514 m.s$^{-1}$.

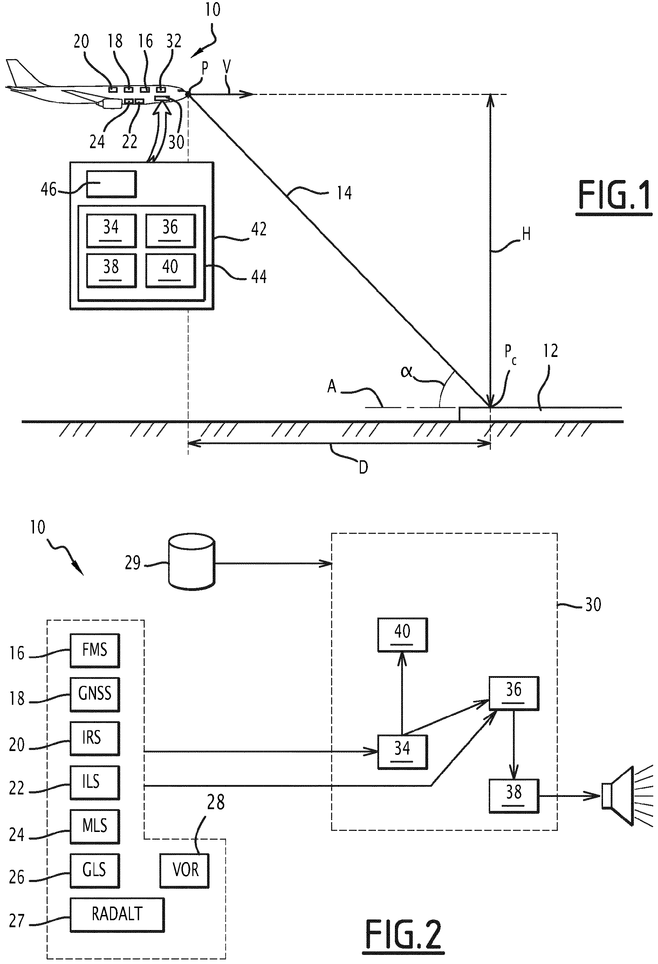

Sur la figure 1, un aéronef 10 est en phase d'approche vers une piste d'atterrissage 12, et est propre à se déplacer suivant un axe prédéterminé 14 d'approche vers la piste d'atterrissage 12.

L'aéronef 10 est de préférence un avion. En variante, l'aéronef 10 est un hélicoptère, ou encore un drone piloté à distance par un pilote.

L'aéronef 10 présente, par rapport au référentiel terrestre, une position courante P, également appelée position instantanée, ainsi qu'une vitesse courante V, également appelée vitesse instantanée.

L'aéronef 10 comprend tout ou partie des systèmes suivants pour fournir les paramètres propres à l'aéronef :

- un système 16 de gestion du vol de l'aéronef, également appelé FMS (de l'anglais *Flight Management System*),
- un système 18 de positionnement par satellite, également appelé GNSS (de l'anglais *Global Navigation Satellite System*), tel qu'un système GPS (de l'anglais *Global Positioning System) ;*
- un système de référence inertielle 20, également appelé système IRS (de l'anglais *Inertial référence System*), qui est couplé ou non au système GPS ;
- un système d'aide à l'atterrissage ILS 22 (de l'anglais *Instrument Landing System*)
- un système d'aide à l'atterrissage MLS 24 (de l'anglais *Microwave Landing System) ;*
- un système d'aide à l'atterrissage GLS 26 (de l'anglais *GBAS Landing System* où GBAS signifie Ground-Based Augmentation System) ;
- un système de mesure de la hauteur de l'aéronef par rapport au sol, de type radio altimètre RADALT 27 ;
- un système de positionnement radioélectrique 28, également appelé système VOR (de l'anglais *VHF Omnidirectional Range*), fonctionnant avec les fréquences VHF ; et
- une base de données 29 contenant notamment des données relatives aux différentes pistes relatives à certains aéroports d'une ou plusieurs régions.

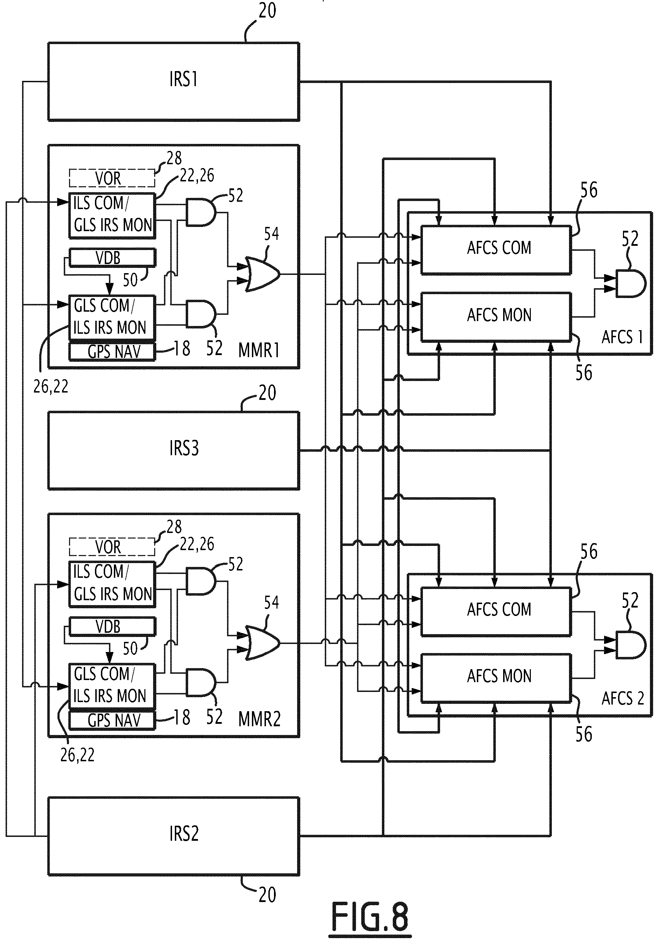

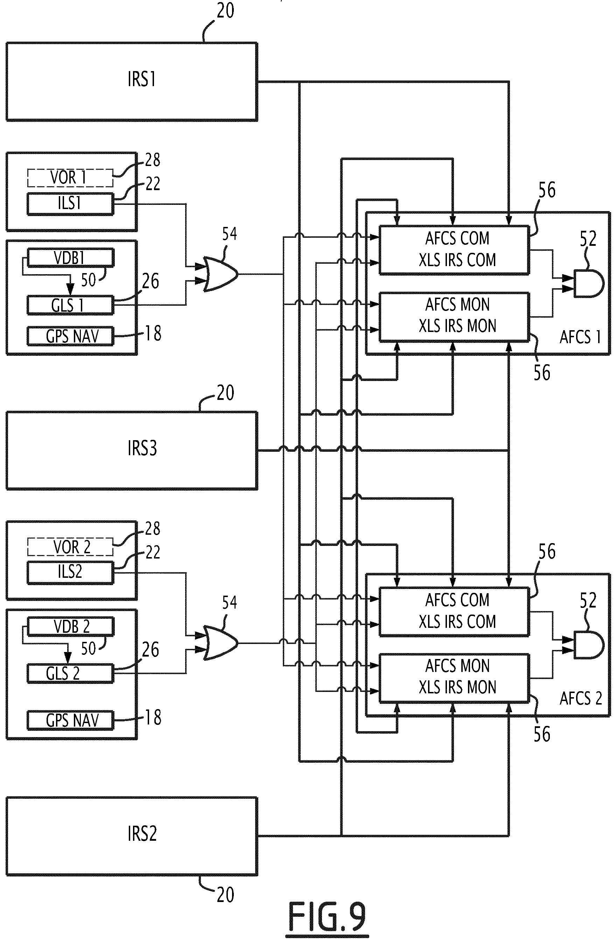

L'homme du métier observera que l'aéronef 10 comprend, dans certaines configurations, plusieurs exemplaires de certains des systèmes précités pour des raisons de redondance, ainsi que cela sera décrit plus en détail en regard des figures 8 et 9.

Selon l'invention, l'aéronef 10 comprend également un dispositif électronique 30 de surveillance d'au moins un signal de radionavigation en phase d'approche de la piste d'atterrissage 12, chaque signal de radionavigation étant issu d'une chaine de réception 32 embarquée à bord de l'aéronef 10.

La piste d'atterrissage 12 est sensiblement plane, et définit un plan horizontal de référence A. La piste d'atterrissage 12 comporte un point caractéristique Pc, par rapport auquel est déterminé notamment la distance entre l'aéronef 10 et la piste d'atterrissage 12.

L'axe prédéterminé d'approche 14 présente un angle $\alpha$ par rapport au plan de référence A de la piste d'atterrissage. La valeur de l'angle $\alpha$ est, par exemple, égale à 3 degrés, et est par exemple contenue dans la base de données 29 contenant des informations sur les pistes des aéroports.

Les différents systèmes avioniques, à savoir les systèmes FMS 16, GNSS 18, IRS 20, ILS 22, MLS 24, GLS 26 et VOR 28, sont connus en soi et sont aptes à fournir divers paramètres avioniques au dispositif de surveillance 30.

Les paramètres avioniques comportent notamment :

- la distance de l'aéronef 10 au seuil de piste Pc, fournie par les systèmes FMS 16 et/ou GNSS 18 ;
- la vitesse instantanée V de l'aéronef 10, fournie par les systèmes GNSS 18 et/ou IRS 20, en particulier la vitesse sol instantanée notée GSpeed ;
- la pente instantanée FPA de l'aéronef 10 (de l'anglais *Flight Path Angle*), également appelée pente courante, et fournie par les systèmes IRS 20 et/ou GNSS 18 ;
- une hauteur instantanée H de l'aéronef 10, également appelé hauteur courante au-dessus de la piste, et fournie par les systèmes RADALT 27 et/ou FMS 16 et/ou GNSS 18;
- une route instantanée de l'aéronef 10, également appelée route courante, et fournie par les systèmes GNSS 18 et/ou IRS 20 ;
- une déviation angulaire latérale courante de l'aéronef 10, ou signal LOC (de l'anglais *Localizer deviation*) par rapport à l'axe prédéterminé 14 d'approche vers la piste d'atterrissage 12, fournie par les systèmes ILS 22 et/ou MLS 24 et/ou GLS 26 ; et

- une déviation angulaire verticale courante de l'aéronef 10, ou signal GLIDE (de l'anglais *Glide deviation*) par rapport à l'axe prédéterminé 14 d'approche vers la piste d'atterrissage 12, fournie par les systèmes ILS 22 et/ou MLS 24 et/ou GLS 26.

Le dispositif électronique 30 de surveillance d'au moins un signal de radionavigation comporte un module de calcul 34 configuré pour calculer une valeur angulaire de déplacement dans un plan de référence, un premier module de comparaison 36 configuré pour comparer la valeur angulaire de déplacement calculée avec le signal de radionavigation correspondant, et un module d'alerte 38 configuré pour générer un signal d'alerte en fonction du résultat de la comparaison entre la valeur angulaire de déplacement calculée et le signal de radionavigation correspondant.

En complément facultatif, le module de calcul 34 est configuré en outre pour effectuer un filtrage de valeurs successives d'un signal de radionavigation surveillé.

Selon ce complément facultatif, le dispositif de surveillance 30 comporte en outre un deuxième module de comparaison 40 configuré pour comparer la valeur moyenne résultant dudit filtrage des valeurs du signal de radionavigation surveillé, avec une grandeur prévue vers l'axe de la piste, parmi une route prévue et une pente prévue selon le signal de radionavigation surveillé. Le deuxième module de comparaison 40 est également configuré pour comparer la sensibilité mesurée des variations mesurées par rapport à la sensibilité prévue selon le signal de radionavigation surveillé. Lesdites grandeurs prévues sont issues de la base de données 29 embarquée à bord de l'aéronef 10 et fournissant les valeurs théoriques des grandeurs surveillées.

Dans l'exemple de la figure 1, le dispositif de surveillance 30 comporte une unité de traitement d'informations 42 formée par exemple d'une mémoire 44 associée à un processeur 46.

La chaîne de réception 32 comporte au moins un système parmi les systèmes d'aide à l'atterrissage précités, à savoir le système d'aide à l'atterrissage ILS 22, le système d'aide à l'atterrissage MLS 24 et le système d'aide à l'atterrissage GLS 26.

Dans l'exemple de la figure 1, le module de calcul 34, le premier module de comparaison 36, le module d'alerte 38, ainsi qu'en complément facultatif le deuxième module de comparaison 40, sont réalisés chacun sous forme d'un logiciel exécutable par le processeur 46. La mémoire 44 du dispositif de surveillance 30 est alors apte à stocker un logiciel de calcul configuré pour calculer une valeur angulaire de déplacement dans le plan de référence, un premier logiciel de comparaison configuré pour comparer la valeur angulaire de déplacement calculée avec le signal de radionavigation correspondant, et un logiciel d'alerte configuré pour générer le signal d'alerte en fonction du résultat de la comparaison entre la valeur angulaire de déplacement calculée et le signal de radionavigation correspondant, ainsi qu'en complément facultatif un deuxième logiciel de comparaison configuré pour comparer la valeur moyenne résultant dudit filtrage des valeurs du signal de radionavigation surveillé, avec une grandeur prévue vers l'axe de la piste, parmi une route prévue et une pente prévue selon le signal de radionavigation surveillé. Le processeur 46 de l'unité de traitement d'informations 42 est alors apte à exécuter le logiciel de calcul, le premier logiciel de comparaison, le logiciel d'alerte, ainsi qu'en complément facultatif le deuxième logiciel de comparaison.

En variante non représentée, le module de calcul 34, le premier module de comparaison 36, le module d'alerte 38, ainsi qu'en complément facultatif le deuxième module de comparaison 40, sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Spécifie Integrated Circuit).*

Selon l'invention, le module de calcul 34 est configuré pour calculer la valeur angulaire de déplacement en fonction d'une grandeur relative à l'aéronef parmi une route et une pente, suivant le signal de radionavigation surveillé, ladite grandeur relative à l'aéronef étant issue d'un équipement avionique distinct de la chaine de réception 32, tel que le système GNSS 18 ou IRS 20.

Le module de calcul 34 est alors configuré pour calculer la valeur angulaire de déplacement indépendamment d'une information de position d'une balise au sol apte à émettre le signal de radionavigation, telle qu'une balise LOC apte à émettre un signal LOC ou une balise GLIDE apte à émettre un signal GLIDE.

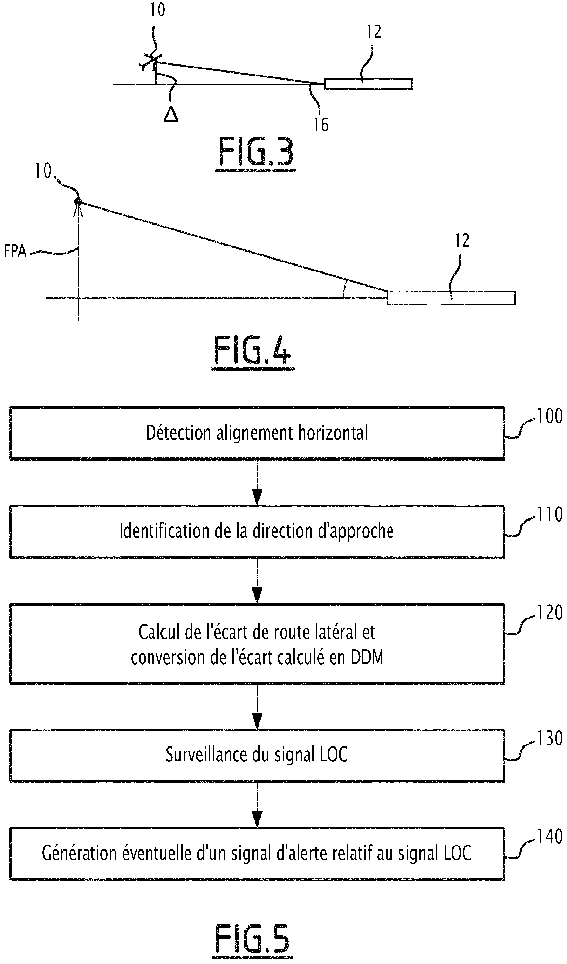

Lorsque le signal de radionavigation surveillé est un signal LOC, le module de calcul 34 est configuré pour calculer, en fonction de la route instantanée de l'aéronef 10, un déplacement angulaire latéral $\Delta$, également appelé valeur angulaire de déplacement latéral, de part et d'autre d'une direction moyenne d'approche vers la piste dans un plan horizontal, la direction moyenne étant aussi calculée par le module de calcul 34, comme représenté sur la figure 3.

Lorsque le signal de radionavigation surveillé est un signal GLIDE, le module de calcul 34 est configuré pour calculer en fonction de la pente instantanée FPA de l'aéronef 10, une valeur angulaire de déplacement vertical, de part et d'autre d'une pente moyenne de descente vers la piste dans un plan vertical, la pente moyenne de descente étant aussi calculée par le module de calcul 34, , comme représenté sur la figure 4.

En complément, la valeur angulaire de déplacement calculée est de préférence exprimée en DDM, et le module de calcul 34 est configuré pour calculer un écart linéaire à partir d'une variable dépendant du signal de radionavigation surveillé et de la grandeur parmi la route et la pente, puis pour convertir l'écart linéaire en la valeur angulaire de déplacement exprimée en DDM. La variable dépendant du signal de radionavigation surveillé est, par exemple, une valeur moyenne résultant dudit filtrage des valeurs du signal de radionavigation surveillé.

Selon ce complément, le module de calcul 34 est, par exemple, configuré pour calculer l'écart linéaire en fonction en outre d'une intégration de la vitesse instantanée V de l'aéronef 10 projetée sur la direction moyenne d'approche ou la pente moyenne de descente dans le plan de référence correspondant.

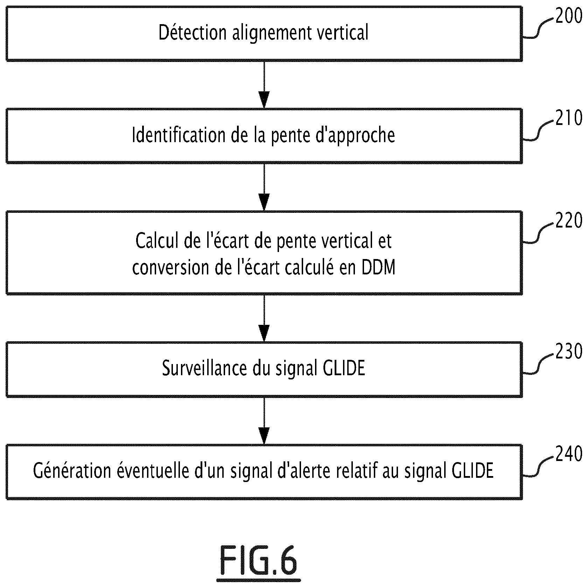

Le fonctionnement du dispositif électronique de surveillance 30, et en particulier du module de calcul 34, va être à présent décrit plus en détail en regard des figures 5 et 6, représentant un organigramme du procédé de surveillance selon l'invention, dans le cas de la surveillance du signal LOC avec calcul de la valeur angulaire de déplacement latéral dans le plan horizontal (figure 5), et respectivement un organigramme du procédé de surveillance selon l'invention, dans le cas de la surveillance du signal GLIDE avec calcul de la valeur angulaire de déplacement vertical dans le plan vertical (figure 6).

Dans le cas de la surveillance du signal LOC, lors d'une étape initiale 100, le module de calcul 34 commence par détecter si l'aéronef 10 est aligné ou non par rapport à l'axe de la piste 12 dans le plan de référence correspondant, c'est-à-dire dans le plan horizontal dans le cas du signal LOC.

Pour effectuer cette détection d'un alignement horizontal de l'aéronef 10, c'est-à-dire d'un alignement de l'aéronef 10 dans le plan horizontal, le module de calcul 34 détermine par exemple si les valeurs successivement reçues du signal LOC ne varient pas au-delà d'un seuil prédéfini pendant une durée prédéfinie. A titre d'exemple, le module de calcul 34 vérifie que les variations sont inférieures à 0,01 DDM parmi les valeurs successivement reçues du signal LOC pendant une durée au moins égale à 10 secondes.

Lorsque les variations du signal LOC reçu ne dépassent pas le seuil prédéfini pendant la durée prédéfinie, le module de calcul 34 en conclut qu'il a détecté un alignement horizontal de l'aéronef 10, et passe à l'étape suivante 110.

Dans le cas contraire, le module de calcul 34 détermine que l'aéronef 10 n'est pas aligné dans le plan horizontal, et ne passe pas à l'étape suivante 110. Le module de calcul 34 reste alors dans cette étape initiale 100 jusqu'à temps qu'un alignement horizontal soit détecté.

Lors de l'étape suivante 110, le module de calcul 34 effectue un filtrage des valeurs successives du signal permettant la surveillance du signal de radionavigation considéré, en l'occurrence du signal LOC, afin d'identifier la direction d'approche de l'aéronef 10. Autrement dit, le module de calcul 34 identifie alors par filtrage la direction du signal LOC à partir de la route instantanée de l'aéronef 10, fournie par exemple par les systèmes GNSS 18 ou IRS 20.

Le filtrage effectué par le module de calcul 34 est par exemple un filtrage passe-bas avec une constante de temps supérieure ou égale à 30 secondes.

Le filtrage effectué est par exemple mis en oeuvre via une moyenne glissante sur les valeurs successivement reçues de route courante à partir du moment où le signal LOC est stabilisé. Le filtrage mis en oeuvre par le module de calcul 34 vérifie alors par exemple les équations suivantes :

$$\text{TrackRWY}_N = ((N\text{-}1)\,\text{TrackRWY}_N + \text{Track}(T)) \,/\, N \qquad\qquad (1)$$

$$\text{TrackRWY}(T) = \text{TrackRWY}_N \qquad\qquad (2)$$

où $N$ est un indice entier dont la valeur est incrémentée d'une unité à chaque nouvelle valeur du signal LOC ;

$\text{TrackRWY}_N$ représente la valeur d'indice $N$ de la route moyenne fournie par le système IRS et/ou GNSS, définissant la direction moyenne d'approche vers la piste, supposée être par exemple l'axe de piste 12;
$\text{Track}(T)$ représente la route instantanée de l'aéronef 10 à l'instant T ; et
$\text{TrackRWY}(T)$ représente la valeur ainsi filtrée du signal LOC à l'instant T.

En complément facultatif, l'étape de filtrage 110 pour identifier la direction d'approche de l'aéronef 10 est mise en oeuvre tant que l'altitude instantanée H de l'aéronef 10, fournie par exemple par les systèmes GNSS 18 ou IRS 20, est supérieure à une valeur seuil prédéfinie, cette valeur seuil étant par exemple inférieure ou égale à 300 Ft.

Le module de calcul 34 calcule ensuite, lors d'une étape 120, une valeur angulaire de déplacement dans le plan de référence correspondant, en l'occurrence un écart angulaire de route dans le plan horizontal.

L'écart angulaire de route est de préférence exprimé en DDM, et le module de calcul 34 calcule alors un écart linéaire de route à partir d'une variable dépendant du signal de radionavigation surveillé et de la route, puis convertit l'écart linéaire de route en l'écart angulaire de route exprimé en DDM. Dans l'exemple décrit, la variable dépendant du signal de radionavigation surveillé est la valeur moyenne résultant dudit filtrage des valeurs de la route courante, effectué lors de l'étape 120 précédente.

En complément facultatif, l'étape de calcul d'écart 120 est mise en oeuvre à partir du moment où l'altitude instantanée H de l'aéronef 10, fournie par exemple par les systèmes GNSS 18 ou IRS 20, est inférieure à une valeur seuil prédéfinie, cette valeur seuil ayant de préférence la même valeur que la valeur seuil d'altitude précitée, et étant par exemple inférieure ou égale à 300 Ft.

Pour le calcul de l'écart linéaire de route, le module de calcul 34 calcule par exemple un déplacement latéral de l'aéronef 10 sur l'axe horizontal par rapport à l'axe de la piste 12 par intégration de la vitesse sol de l'aéronef 10 projetée latéralement avec l'écart de route, ceci à partir du moment où la direction d'approche de la piste 12 par l'aéronef 10 a été identifiée lors de l'étape précédente.

Le calcul du déplacement latéral de l'aéronef 10, mis en oeuvre par le module de calcul 34, vérifie alors par exemple l'équation suivante :

$$\text{Ecart\_track}(T) = \text{Track}(T) - \text{TrackRWY}(T) \tag{3}$$

où Track(T) représente la route instantanée de l'aéronef 10 à l'instant T ;

TrackRWY(T) représente la valeur filtrée du signal LOC à l'instant T, obtenue lors de l'étape précédente 110 ; et
Ecart_track(T) représente l'écart latéral de l'aéronef 10 à l'instant T.

L'intégration de la vitesse sol de l'aéronef 10 projetée latéralement avec l'écart de route dans le plan horizontal vérifie alors par exemple les équations suivantes :

$$\text{Depl\_Lat}(T) = \text{GSpeed}(T)*\sin(\text{Ecart\_track}(T))*\text{Tech} \tag{4}$$

$$\text{Cumul\_depl\_lat}(T) = \text{Cumul\_depl\_lat}(T)+\text{Dep\_Lat}(T) \tag{5}$$

où GSpeed(T) représente la vitesse sol instantanée de l'aéronef 10, fournie par exemple par les systèmes GNSS 18 ou IRS 20 ;

Ecart_track(T) représente l'écart latéral de l'aéronef 10 calculé à l'aide de l'équation (3) ;
Tech représente une période d'échantillonnage ; et
Cumul_depl_lat(T) représente le déplacement latéral de l'aéronef 10, ainsi calculé par intégration de la vitesse sol de l'aéronef 10.

Lors de l'étape 120, le déplacement latéral de l'aéronef 10, ou écart linéaire de route latéral calculé, est ensuite converti, par le module de calcul 34, en écart angulaire de route exprimé en DDM.

Cette conversion angulaire du déplacement latéral de l'aéronef 10 en DDM horizontal est par exemple effectuée à partir d'une mesure de la distance de l'aéronef au seuil de la piste 12, augmentée de valeur(s) simulée(s) de position d'une balise LOC, et d'une valeur de référence d'un facteur d'échelle permettant de passer d'une valeur angulaire à une valeur DDM pour un écart de signal LOC, cette valeur de référence étant par exemple contenue dans la base de données 29.

La conversion angulaire du déplacement latéral de l'aéronef 10 en DDM horizontal vérifie alors par exemple les équations suivantes :

$$\text{LOC\_IRS\_Deg}(T) = \text{Atan}(\text{Cumul\_depl\_lat}(T)/(\text{Dist}(T)+\text{LocDist})) \tag{6}$$

$$\text{LocAmp} = \text{Atan}(\text{THLoc}/2/\text{LocDist}) \tag{7}$$

$$\text{LOC\_IRS\_ddm}(T) = \text{LOC\_IRS\_Deg}(T)*0,155/\text{LocAmp} \tag{8}$$

où Cumul_depl_lat(T) représente le déplacement latéral de l'aéronef 10, calculé précédemment à l'aide de l'équation (5) ;

Dist(T) représente la distance de l'aéronef au seuil de la piste d'atterrissage 12 ;
LocDist représente une valeur simulée de position d'une balise LOC, cette valeur prédéfinie étant par exemple contenue dans la base de données 29 ;

LOC_IRS_Deg(T) représente l'écart angulaire de route à l'instant T ;

LocAmp est un facteur d'échelle permettant de passer d'une valeur angulaire à une valeur DDM pour un écart de signal LOC ; et

LOC_IRS ddm(T) représente l'écart angulaire de route exprimé en DDM à l'instant T.

Lors de l'étape suivante 130, le module de comparaison 36 compare alors la valeur angulaire de déplacement calculée par le module de calcul 34, tel que l'écart angulaire de route exprimé en DDM LOC_IRS ddm(T), avec le signal de radionavigation correspondant, tel que le signal LOC exprimé en DDM à l'instant T, noté LOC(T), issu de la chaîne de réception 32. Ceci permet alors de détecter une éventuelle erreur de mesure dans la chaîne de réception 32 du signal LOC.

Le module d'alerte 38 génère alors, lors de l'étape 140, un signal d'alerte en fonction du résultat de la comparaison entre la valeur angulaire de déplacement calculée LOC_IRS ddm(T) et le signal de radionavigation correspondant LOC(T), qui a été effectuée lors de l'étape précédente 130 par le module de comparaison 36. Plus précisément, le module d'alerte 38 génère un signal d'alerte en cas de détection d'une erreur de mesure dans la chaîne de réception 32.

Le signal d'alerte est, par exemple, généré à partir du moment où la valeur absolue de l'écart entre la valeur angulaire de déplacement calculée LOC_IRS ddm(T) et le signal de radionavigation correspondant LOC(T) est supérieure à un seuil prédéfini pendant au moins une durée minimale prédéfinie, cette durée minimale prédéfinie étant par exemple sensiblement égale à deux secondes.

En complément facultatif, le deuxième module de comparaison 40 compare la valeur moyenne résultant du filtrage des valeurs de la route courante, effectué lors de l'étape 110, avec une route prévue vers l'axe de la piste d'atterrissage 12. Ceci permet alors de détecter en outre une éventuelle anomalie de calage du signal LOC, émis par la balise LOC disposée au sol à proximité de la piste d'atterrissage 12. La route prévue vers l'axe de la piste d'atterrissage 12 est par exemple contenue dans la base de données 29 embarquée à bord de l'aéronef 10.

En complément facultatif également, le deuxième module de comparaison 40 compare l'écart de sensibilité résultant de l'observation de la différence, au cours de leurs évolutions, entre les signaux LOC(T) et LOC_IRS ddm(T) calculés lors de l'étape 120. Ceci permet alors de détecter en outre une éventuelle anomalie de sensibilité du signal LOC, émis par la balise LOC disposée au sol, à proximité de la piste d'atterrissage 12.

Dans le cas de la surveillance du signal GLIDE, représenté avec l'organigramme de la figure 6, lors d'une étape initiale 200, le module de calcul 34 commence par détecter si l'aéronef 10 est aligné ou non par rapport à l'axe de la piste 12 dans le plan de référence correspondant, c'est-à-dire dans le plan vertical dans le cas du signal GLIDE.

Pour effectuer cette détection d'un alignement vertical de l'aéronef 10, c'est-à-dire d'un alignement de l'aéronef 10 dans le plan vertical, le module de calcul 34 détermine par exemple si les valeurs successivement reçues du signal GLIDE ne varient pas au-delà d'un seuil prédéfini pendant une durée prédéfinie. A titre d'exemple, le module de calcul 34 vérifie que les variations sont inférieures à 0,01 DDM parmi les valeurs successivement reçues du signal GLIDE pendant une durée supérieure ou égale à 20 secondes.

Lorsque les variations du signal GLIDE reçu ne dépassent pas le seuil prédéfini pendant la durée prédéfinie, le module de calcul 34 en conclut qu'il a détecté un alignement vertical de l'aéronef 10, et passe à l'étape suivante 210.

Dans le cas contraire, le module de calcul 34 détermine que l'aéronef 10 n'est pas aligné dans le plan vertical, et ne passe pas à l'étape suivante 210. Le module de calcul 34 reste alors dans cette étape initiale 200 jusqu'à temps qu'un alignement vertical soit détecté.

Lors de l'étape suivante 210, le module de calcul 34 effectue un filtrage des valeurs successives du signal de surveillance du signal de radionavigation considéré, en l'occurrence du signal GLIDE, afin d'identifier la pente d'approche de l'aéronef 10. Autrement dit, le module de calcul 34 identifie alors par filtrage la pente du signal GLIDE à partir de la pente instantanée FPA(T) de l'aéronef 10, fournie par exemple par les systèmes GNSS 18 ou IRS 20.

Le filtrage effectué par le module de calcul 34 est par exemple un filtrage passe-bas avec une constante de temps sensiblement égale à 30 secondes.

Le filtrage effectué est par exemple mis en oeuvre via une moyenne glissante sur les valeurs successivement reçues de la pente courante à partir du moment où le signal GLIDE est stabilisé. Le filtrage mis en oeuvre par le module de calcul 34 vérifie alors par exemple les équations suivantes :

$$FPARWY_N = ((N-1)\ FPARWY_N + FPA(T))/N \qquad (9)$$

$$FPARWY(T) = FPARWY_N \qquad (10)$$

où N est un indice entier dont la valeur est incrémentée d'une unité à chaque nouvelle valeur du signal GLIDE ;

FPARWY$_N$ représente la valeur d'indice N du signal de pente moyenne ;
FPA(T) représente la pente instantanée de l'aéronef 10 à l'instant T ; et
FPARWY(T) représente la valeur ainsi filtrée du signal de pente moyenne à l'instant T.

En complément facultatif, l'étape de filtrage 210 pour identifier la pente d'approche de l'aéronef 10 est mise en oeuvre tant que l'altitude instantanée H de l'aéronef 10, fournie par exemple par les systèmes GNSS 18 ou RADALT 27, est supérieure à une valeur seuil prédéfinie, cette valeur seuil étant par exemple inférieure ou égale à 300 Ft.

Le module de calcul 34 calcule ensuite, lors d'une étape 220, une valeur angulaire de déplacement relativement à la pente moyenne de descente dans le plan de référence correspondant, en l'occurrence un écart angulaire de pente dans le plan vertical.

L'écart angulaire de pente est de préférence exprimé en DDM, et le module de calcul 34 calcule alors un écart linéaire de pente à partir d'une variable dépendant du signal de radionavigation surveillé et de la pente courante, puis convertit l'écart linéaire de pente en l'écart angulaire de pente exprimé en DDM. Dans l'exemple décrit, la variable dépendant du signal de radionavigation surveillé est la valeur moyenne résultant dudit filtrage des valeurs du signal de pente courante, effectué lors de l'étape 220 précédente.

En complément facultatif, l'étape de calcul d'écart 220 est mise en oeuvre à partir du moment où l'altitude instantanée H de l'aéronef 10, fournie par exemple par les systèmes GNSS 18 ou IRS 20, est inférieure à une valeur seuil prédéfinie, cette valeur seuil ayant de préférence la même valeur que la valeur seuil d'altitude précitée, et étant par exemple inférieure ou égale à 300 Ft.

Pour le calcul de l'écart linéaire de pente, le module de calcul 34 calcule par exemple un déplacement vertical de l'aéronef 10 sur l'axe vertical, transverse par rapport à l'axe de descente vers la piste 12, par intégration de la vitesse sol de l'aéronef 10 projetée verticalement avec l'écart de pente, ceci à partir du moment où la pente d'approche de la piste 12 par l'aéronef 10 a été identifiée lors de l'étape précédente.

Le calcul du déplacement vertical de l'aéronef 10, mis en oeuvre par le module de calcul 34, vérifie alors par exemple l'équation suivante :

$$\text{Ecart\_FPA}(T) = \text{FPA}(T) - \text{FPARWY}(T) \tag{11}$$

où FPA(T) représente la pente instantanée de l'aéronef 10 à l'instant T ;

FPARWY (T) représente la valeur filtrée du signal GLIDE à l'instant T, obtenue lors de l'étape précédente 210 ; et
Ecart_FPA(T) représente un écart vertical de l'aéronef 10 à l'instant T.

L'intégration de la vitesse sol de l'aéronef 10 projetée verticalement avec l'écart de pente dans le plan vertical vérifie alors par exemple les équations suivantes :

$$\text{Depl\_Vert}(T) = \text{GSpeed}(T)*\sin(\text{FPA}(T))*\sin(\text{Ecart\_FPA}(T))*\text{Tech} \tag{12}$$

$$\text{Cumul\_depl\_vert}(T) = \text{Cumul\_depl\_vert}(T) + \text{Dep\_vert}(T) \tag{13}$$

où GSpeed(T) représente la vitesse sol instantanée de l'aéronef 10, fournie par exemple par les systèmes GNSS 18 ou IRS 20 ;

Ecart_FPA(T) représente l'écart vertical de l'aéronef 10 calculé à l'aide de l'équation (11) ;
Tech représente une période d'échantillonnage ; et
Cumul_depl_vert(T) représente le déplacement vertical de l'aéronef 10, ainsi calculé par intégration de la vitesse sol de l'aéronef 10.

Lors de l'étape 220, le déplacement vertical de l'aéronef 10, ou écart linéaire de pente vertical calculé, est ensuite converti, par le module de calcul 34, en écart angulaire de pente exprimé en DDM.

Cette conversion angulaire du déplacement vertical de l'aéronef 10 en DDM vertical est par exemple effectuée à partir d'une mesure de la distance de l'aéronef au seuil de la piste 12, augmentée de valeur(s) simulée(s) de position d'une balise GLIDE, et d'une valeur de référence d'un facteur d'échelle permettant de passer d'une valeur angulaire à une valeur DDM pour un écart de signal GLIDE, cette valeur de référence étant par exemple contenue dans la base de données 29.

La conversion angulaire du déplacement vertical de l'aéronef 10 en DDM vertical vérifie alors par exemple des équations suivantes :

$$GS\_IRS\_Deg(T) = Atan(Cumul\_depl\_vert(T)/(Dist(T)+GSDist)) \qquad (14)$$

$$GSAmp = 0,75*FPAREF \qquad (15)$$

$$GS\_IRS\_ddm(T) = GS\_IRS\_Deg(T)*0,175/GSAmp \qquad (16)$$

où Cumul_depl_vert(T) représente le déplacement vertical de l'aéronef 10, calculé précédemment à l'aide de l'équation (5) ;

Dist(T) représente la distance de l'aéronef au seuil de la piste d'atterrissage 12 ;
GSDist représente une valeur simulée de position d'une balise GLIDE, cette valeur prédéfinie étant par exemple contenue dans la base de données 29 ;
GS_IRS_Deg(T) représente l'écart angulaire de pente à l'instant T ;
GSAmp est un facteur d'échelle permettant de passer d'une valeur angulaire à une valeur DDM pour un écart de signal GLIDE ; et
GS_IRS ddm(T) représente l'écart angulaire de pente exprimé en DDM à l'instant T.

Lors de l'étape suivante 230, le module de comparaison 36 compare alors la valeur angulaire de déplacement calculée par le module de calcul 34, tel que l'écart angulaire de pente exprimé en DDM GS_IRS ddm(T), avec le signal de radionavigation correspondant, tel que le signal GLIDE exprimé en DDM à l'instant T, noté GS(T), issu de la chaîne de réception 32, afin de détecter une éventuelle erreur de mesure dans la chaîne de réception 32 du signal GLIDE.

Le module d'alerte 38 génère alors, lors de l'étape 240, un signal d'alerte en fonction du résultat de la comparaison entre la valeur angulaire de déplacement calculée GS_IRS ddm(T) et le signal de radionavigation correspondant GS(T), comparaison qui a été effectuée lors de l'étape précédente 230 par le module de comparaison 36. Plus précisément, le module d'alerte 38 génère un signal d'alerte en cas de détection d'une erreur de mesure dans la chaîne de réception 32.

Le signal d'alerte est, par exemple, généré à partir du moment où la valeur absolue de l'écart entre la valeur angulaire de déplacement calculée GS_IRS_ddm(T) et le signal de radionavigation correspondant GS(T) est supérieure à un seuil prédéfini pendant au moins une durée minimale prédéfinie, cette durée minimale prédéfinie étant par exemple sensiblement égale à deux secondes.

En complément facultatif, le deuxième module de comparaison 40 compare la valeur moyenne résultant du filtrage des valeurs du signal GLIDE, effectué lors de l'étape 210, avec une pente prévue vers l'axe de la piste d'atterrissage 12. Ceci permet alors de détecter en outre une éventuelle anomalie de calage du signal GLIDE, émis par la balise GLIDE disposée au sol à proximité de la piste d'atterrissage 12. La pente prévue vers l'axe de la piste d'atterrissage 12 est par exemple contenue dans la base de données 29 embarquée à bord de l'aéronef 10.

En complément facultatif également, le deuxième module de comparaison 40 compare l'écart de sensibilité résultant de l'observation de la différence, au cours de leurs évolutions, entre les signaux GLIDE(T) et GLIDE_IRS ddm(T) calculés lors de l'étape 120. Ceci permet alors de détecter en outre une éventuelle anomalie de sensibilité du signal GLIDE, émis par la balise GLIDE disposée au sol, à proximité de la piste d'atterrissage 12.

Le dispositif de surveillance 30 selon l'invention tire ainsi parti du fait que l'approche finale de la piste d'atterrissage 12 par l'aéronef 10 se déroule à vitesse à peu près constante de l'aéronef 10. Dans ces conditions, les erreurs de mesures fournies par un système de navigation inertielle IRS ou de positionnement par satellite GNSS demeurent à peu près constantes durant le temps limité de l'approche.

Durant cette phase d'approche, le système de navigation inertielle IRS ou de positionnement par satellite GNSS permet alors d'observer précisément la direction et la pente de descente suivi par l'aéronef 10, éventuellement à un biais près.

Le dispositif de surveillance 30 selon l'invention utilise alors les variations autour de la direction moyenne suivie par l'aéronef 10, et respectivement les variations autour de la pente moyenne, pour surveiller le signal de radionavigation reçu correspondant, à savoir le signal LOC, et respectivement le signal GLIDE, et détecter d'éventuelles erreurs de mesures sur les chaines simples qui fournissent les signaux de radionavigation horizontaux LOC et verticaux GLIDE.

En complément facultatif, lorsque le deuxième module de comparaison 40 compare les observations de direction et la pente moyenne de guidage, ainsi que les évolutions autour des valeurs observées, avec les valeurs théoriques attendues pour une approche guidée par le système ILS, MLS ou GLS considéré vers une piste d'atterrissage 12 donnée, le dispositif de surveillance 30 selon l'invention permet en outre de vérifier que le signal d'entrée dispositif de surveillance 30 selon l'invention est conforme au signal prévu correspondant, c'est-à-dire à ce qu'il devrait être. Le dispositif de surveillance 30 permet alors l'utilisation d'un signal de guidage ILS, MLS et/ou GLS dans des conditions plus contraignantes que celles pour lesquelles il est qualifié, en particulier d'autoriser la descente de l'aéronef 10 jusqu'à des minima plus bas quand il est utilisé en combinaison avec des systèmes de type SVGS (de l'anglais *Synthesis Vision Guidance System*).

Aussi, le dispositif de surveillance 30 selon l'invention permet de surveiller les signaux de radionavigation reçus en phase d'approche de la piste d'atterrissage, tels que les signaux LOC et/ou GLIDE reçus, et de détecter une erreur de mesure dans une chaîne de réception correspondante le cas échéant, et de réduire les redondances matérielles requises dans les architectures permettant la mise en oeuvre des opérations d'approches et d'atterrissages les plus contraignantes.

Le dispositif de surveillance 30 selon l'invention permet alors en outre de réduire à deux chaines simples ILS, MLS ou GLS 32 le besoin de redondance pour supporter les exigences liées à une capacité de pouvoir continuer à fonctionner avec un niveau d'intégrité suffisant après détection d'une panne sur une des chaines redondantes. En cas de défaillance d'une des deux chaines simples ILS, MLS ou GLS 32, le dispositif de surveillance 30 correspondant permet alors d'identifier la chaine ILS, MLS ou GLS 32 défaillante, et d'assurer la surveillance de la chaine ILS, MLS ou GLS 32 restant opérationnelle. Le ou les dispositifs de surveillance 30 selon l'invention permettent alors de consolider les paramètres ILS, MLS et/ou GLS susceptibles d'être implémentés dans différents composants de l'architecture.

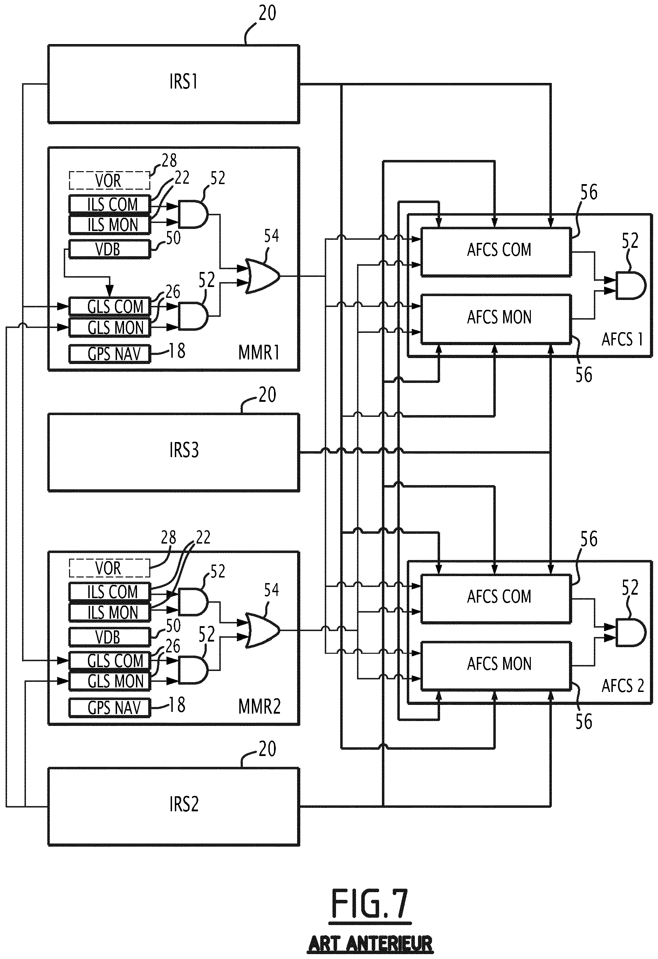

Le dispositif électronique 30 de surveillance d'au moins un signal de radionavigation en phase d'approche permet donc de simplifier la complexité matérielle des solutions d'architecture mises en oeuvre pour satisfaire les exigences d'intégrité et de continuité requises pour les atterrissages en condition de visibilité les plus contraignantes, comme cela va être explicité ci-après en regard des figures 7 à 9, où la figure 7 est une représentation schématique d'une architecture redondante de l'état de la technique, tandis que les figures 8 et 9 sont des représentations schématiques d'architectures redondantes selon l'invention, suivant une première configuration et respectivement une deuxième configuration.

Pour garantir le niveau d'intégrité et de continuité requis pour supporter les opérations d'atterrissage et de roulage en condition de visibilité les plus réduites, condition dite de catégorie IIIB, une simple chaine matérielle de guidage ne suffit pas, et il est alors nécessaire d'avoir une redondance de certains systèmes avioniques. L'exigence dimensionnant la conception des systèmes pour supporter l'atterrissage et le roulage est la capacité de pouvoir continuer à fonctionner avec un niveau d'intégrité suffisant après détection d'une panne sur une des chaines redondantes, ces systèmes sont alors dits de type FAIL OPERATIONAL.

Un aéronef 10 permettant un atterrissage en condition de catégorie IIIB met alors généralement en oeuvre pour la fourniture des informations de guidage ILS, MLS et/ou GLS, une architecture matérielle de type duale COM/MON au travers de doublets d'équipements de réception multimode, également appelés équipements MMR (de l'anglais *Multi-Mode Receiver*), dont l'architecture interne est redondée.

La figure 7 illustre une architecture avionique de l'état de la technique utilisant des ensembles MMR permettant de supporter des opérations d'approche et d'atterrissage jusqu'en condition de catégorie IIIB.

Cette figure fait apparaitre principalement les ensembles MMR, mais aussi les systèmes IRS et de pilotage automatique AFCS 56 (de l'anglais *Aircraft Flight Control System*) qui sont nécessaires dans la construction d'un système de pilotage automatique de type FAIL OPERATIONAL, requis pour supporter les opérations d'approche et d'atterrissage en condition de très faible visibilité (catégorie IIIB).

L'architecture est duale COM/MON vis-à-vis de l'ensemble MMR pour la fourniture des écarts LOC et GLIDE en ILS ou GLS, et vis-à-vis du système de pilotage automatique AFCS 56 pour le calcul de commandes de gouvernes et de commandes de moteurs, avec l'utilisation de portes logiques ET 52, ou portes logiques AND, puis d'une porte logique OU 54, ou porte logique OR. L'architecture est triplex vis-à-vis de la fourniture des informations inertielles utilisés par le système de pilotage automatique AFCS 56 pour la stabilisation de l'aéronef 10. L'ensemble MMR comporte aussi en complément un système VDB 50 pour la transmission de données VHF.

L'homme du métier observera que la fonction de l'ensemble MMR ne se limite pas à la fourniture des informations ILS ou GLS pendant la phase d'approche de la piste d'atterrissage 12. En effet, la fourniture des informations ILS nécessite la mise en oeuvre de modules de réception radio de type VHF, et quand ils ne sont pas utilisés en mode ILS, ces modules de réception radio de type VHF sont utilisables pour fournir des mesures VOR pour une navigation conventionnelle, ou des données *datalink* utilisées par le système GLS 26. La fourniture des informations GLS nécessite la mise en oeuvre de système(s) GNSS 18.

La figure 8 illustre une architecture avionique selon l'invention, suivant une première configuration avec un ensemble MMR simplifié. Au lieu de dupliquer dans l'ensemble MMR, les chaines de traitements ILS et GPS, on duplique simplement le dispositif de surveillance 30 selon l'invention sur chacune des chaines simples ILS et GLS, par exemple sous forme d'un algorithme de surveillance exécuté par une unité de traitement d'informations 42 d'un dispositif électronique existant ou encore sous forme d'un dispositif électronique dédié. Le dispositif de surveillance 30 associé à la chaine simple ILS réalise à partir de données d'entrée inertielles de route, de pente et de distance au seuil de piste, la surveillance de la chaine simple GLS en mode d'approche GLS. Réciproquement, le dispositif de surveillance 30 associé à la chaine simple GLS réalise à partir de données d'entrée inertielles de route, de pente et de distance au seuil de piste, la surveillance de la chaine simple ILS en mode d'approche ILS. Par rapport à un ensemble MMR de l'état de la technique qui comporte une chaine double ILS et une chaine double GLS, le gain est alors de deux calculateurs dans l'ensemble MMR simplifié selon l'invention. Les avantages associés sont alors une simplification de la conception et une réduction significative du coût à fonctionnalité équivalente. Il est en outre possible d'utiliser l'ensemble MMR simplifié au sein d'architectures avioniques destinés à des aéronefs qui n'ont pas besoin de capacité de type FAIL OPERATIONAL.

La figure 9 illustre une architecture avionique selon l'invention, suivant une deuxième configuration, utilisant des chaines simples séparées ILS et GPS, fournissant des écarts de guidage ILS et GLS, pour laquelle la capacité de type FAIL OPERATIONAL est ajoutée en implémentant des dispositifs de surveillance 30 selon l'invention, pour surveiller les signaux ILS ou GLS reçus, notamment pour les différents systèmes de pilotage automatique AFCS 56, qui doivent nécessairement fournir une capacité de type FAIL OPERATIONAL. L'avantage associé est alors notamment d'offrir une architecture alternative à l'ensemble MMR, en réutilisant des systèmes GPS 18 ou ILS 22 qui sont utilisés également dans des architectures d'aéronefs qui ne visent pas la capacité de type FAIL OPERATIONAL.

## Revendications

1.  Dispositif électronique (30) de surveillance d'au moins un signal de radionavigation (LOC) en phase d'approche d'une piste d'atterrissage (12), chaque signal de radionavigation (LOC) étant issu d'une chaine de réception (32) embarquée à bord d'un aéronef (10),

    le dispositif (30) comprenant :

    - un module de calcul (34) configuré pour calculer une valeur angulaire de déplacement dans un plan de référence,
    - un module de comparaison (36) configuré pour comparer la valeur angulaire de déplacement calculée avec le signal de radionavigation correspondant, et
    - un module d'alerte (38) configuré pour générer un signal d'alerte en fonction du résultat de la comparaison entre la valeur angulaire de déplacement calculée et le signal de radionavigation correspondant,

    caractérisé en ce que le module de calcul (34) est configuré pour calculer la valeur angulaire de déplacement en fonction d'une grandeur relative à l'aéronef (10) parmi une route et une pente, selon le signal de radionavigation surveillé, ladite grandeur relative à l'aéronef (10) étant issue d'un équipement avionique (18, 20) distinct de la chaine de réception (32),
    le signal de radionavigation surveillé étant un signal LOC, et le module de calcul (34) étant alors configuré pour calculer une valeur angulaire de déplacement latéral dans un plan horizontal en fonction d'une route instantanée de l'aéronef (10).

2.  Dispositif électronique (30) de surveillance d'au moins un signal de radionavigation (GLIDE) en phase d'approche d'une piste d'atterrissage (12), chaque signal de radionavigation (GLIDE) étant issu d'une chaine de réception (32) embarquée à bord d'un aéronef (10),

    le dispositif (30) comprenant :

    - un module de calcul (34) configuré pour calculer une valeur angulaire de déplacement dans un plan de référence,
    - un module de comparaison (36) configuré pour comparer la valeur angulaire de déplacement calculée avec le signal de radionavigation correspondant, et
    - un module d'alerte (38) configuré pour générer un signal d'alerte en fonction du résultat de la comparaison entre la valeur angulaire de déplacement calculée et le signal de radionavigation correspondant,

    caractérisé en ce que le module de calcul (34) est configuré pour calculer la valeur angulaire de déplacement en fonction d'une grandeur relative à l'aéronef (10) parmi une route et une pente, selon le signal de radionavigation surveillé, ladite grandeur relative à l'aéronef (10) étant issue d'un équipement avionique (18, 20) distinct de la chaine de réception (32),

le signal de radionavigation surveillé étant un signal GLIDE, et le module de calcul (34) étant alors configuré pour calculer une valeur angulaire de déplacement vertical dans un plan vertical en fonction d'une pente instantanée de l'aéronef (10).

3. Dispositif (30) selon la revendication 1 ou 2, dans lequel le module de calcul (34) est configuré pour calculer la valeur angulaire de déplacement indépendamment d'une information de position d'une balise au sol apte à émettre le signal de radionavigation.

4. Dispositif (30) selon l'une quelconque des revendications précédentes, dans lequel la valeur angulaire de déplacement est exprimée en DDM, et le module de calcul (34) est configuré pour calculer un écart linéaire à partir d'une variable dépendant du signal de radionavigation surveillé et de la grandeur parmi la route et la pente, puis pour convertir l'écart linéaire en la valeur angulaire de déplacement exprimée en DDM.

5. Dispositif (30) selon la revendication 4, dans lequel le module de calcul (34) est configuré pour effectuer un filtrage de valeurs successives du signal de radionavigation surveillé, et la variable dépendant du signal de radionavigation surveillé est une valeur moyenne résultant dudit filtrage des valeurs du signal de radionavigation surveillé.

6. Dispositif (30) selon la revendication 5, dans lequel le dispositif (30) comprend en outre un deuxième module de comparaison (40) configuré pour comparer la valeur moyenne résultant dudit filtrage des valeurs du signal de radionavigation surveillé, avec une grandeur prévue vers l'axe de la piste, parmi une route prévue et une pente prévue selon le signal de radionavigation surveillé, ladite grandeur prévue étant issue d'une base de données embarquée à bord de l'aéronef (10) et fournissant les valeurs théoriques des grandeurs surveillées.

7. Dispositif (30) selon l'une quelconque des revendications 4 à 6, dans lequel le module de calcul (34) est configuré pour calculer l'écart linéaire en fonction en outre d'une intégration d'une vitesse sol de l'aéronef (10) projetée dans le plan de référence.

8. Procédé de surveillance d'au moins un signal de radionavigation (LOC) en phase d'approche d'une piste d'atterrissage (12), chaque signal de radionavigation (LOC) étant issu d'une chaine de réception (32) embarquée à bord d'un aéronef (10),

   le procédé étant mis en oeuvre par un dispositif électronique de surveillance (30), et comprenant :

   - le calcul (100, 110, 120 ; 200, 210, 220) d'une valeur angulaire de déplacement dans un plan de référence,
   - la comparaison (130 ; 230) de la valeur angulaire de déplacement calculée avec le signal de radionavigation correspondant, et
   - la génération (140 ; 240) d'un signal d'alerte en fonction du résultat de la comparaison entre la valeur angulaire de déplacement calculée et le signal de radionavigation correspondant,

   **caractérisé en ce que** le calcul (100, 110, 120 ; 200, 210, 220) de la valeur angulaire de déplacement est effectué en fonction d'une grandeur relative à l'aéronef (10) parmi une route et une pente, selon le signal de radionavigation surveillé, ladite grandeur relative à l'aéronef (10) étant issue d'un équipement avionique (18, 20) distinct de la chaine de réception (32),
   le signal de radionavigation surveillé étant un signal LOC, et lors du calcul (100, 110, 120 ; 200, 210, 220), une valeur angulaire de déplacement latéral est calculée dans un plan horizontal en fonction d'une route instantanée de l'aéronef (10).

9. Procédé de surveillance d'au moins un signal de radionavigation (GLIDE) en phase d'approche d'une piste d'atterrissage (12), chaque signal de radionavigation (GLIDE) étant issu d'une chaine de réception (32) embarquée à bord d'un aéronef (10),

   le procédé étant mis en oeuvre par un dispositif électronique de surveillance (30), et comprenant :

   - le calcul (100, 110, 120 ; 200, 210, 220) d'une valeur angulaire de déplacement dans un plan de référence,
   - la comparaison (130 ; 230) de la valeur angulaire de déplacement calculée avec le signal de radionavigation correspondant, et
   - la génération (140 ; 240) d'un signal d'alerte en fonction du résultat de la comparaison entre la valeur angulaire de déplacement calculée et le signal de radionavigation correspondant,

**caractérisé en ce que** le calcul (100, 110, 120 ; 200, 210, 220) de la valeur angulaire de déplacement est effectué en fonction d'une grandeur relative à l'aéronef (10) parmi une route et une pente, selon le signal de radionavigation surveillé, ladite grandeur relative à l'aéronef (10) étant issue d'un équipement avionique (18, 20) distinct de la chaine de réception (32),

le signal de radionavigation surveillé étant un signal GLIDE, et lors du calcul (100, 110, 120 ; 200, 210, 220), une valeur angulaire de déplacement vertical est calculée dans un plan vertical en fonction d'une pente instantanée de l'aéronef (10).

10. Programme d'ordinateur comportant des instructions logicielles qui, lorsqu'elles sont exécutées par un ordinateur, mettent en oeuvre un procédé selon la revendication 8 ou 9.

**Patentansprüche**

1. Elektronische Vorrichtung (30) zur Überwachung mindestens eines Funknavigationssignals (LOC) in Annäherungsphase an eine Landebahn (12), wobei jedes Funknavigationssignal (LOC) von einer Empfangskette (32) an Bord eines Luftfahrzeugs (10) stammt,

die Vorrichtung (30) umfassend:

- ein Berechnungsmodul (34), das konfiguriert ist, um einen Verlagerungswinkelwert in einer Referenzebene zu berechnen,
- ein Vergleichsmodul (36), das konfiguriert ist, um den berechneten Verlagerungswinkelwert mit dem entsprechenden Funknavigationssignal zu vergleichen, und
- ein Warnmodul (38), das konfiguriert ist, um abhängig von dem Resultat des Vergleichs zwischen dem berechneten Verlagerungswinkelwert und dem entsprechenden Funknavigationssignal ein Warnsignal zu erzeugen,

**dadurch gekennzeichnet, dass** das Berechnungsmodul (34) konfiguriert ist, um den Verlagerungswinkelwert abhängig von einer auf das Luftfahrzeug (10) bezogenen Größe aus einer Route und einer Steigung gemäß dem überwachten Funknavigationssignal zu berechnen, wobei die auf das Luftfahrzeug (10) bezogene Größe aus einer Avionikausrüstung (18, 20) stammt, die von der Empfangskette (32) verschieden ist,

wobei das überwachte Funknavigationssignal ein LOC-Signal ist, und das Berechnungsmodul (34) dann konfiguriert ist, um einen seitlichen Verlagerungswinkelwert in einer horizontalen Ebene abhängig von einer momentanen Route des Luftfahrzeugs (10) zu berechnen.

2. Elektronische Vorrichtung (30) zur Überwachung mindestens eines Funknavigationssignals (GLIDE) in Annäherungsphase an eine Landebahn (12), wobei jedes Funknavigationssignal (GLIDE) von einer Empfangskette (32) an Bord eines Luftfahrzeugs (10) stammt,

die Vorrichtung (30) umfassend:

- ein Berechnungsmodul (34), das konfiguriert ist, um einen Verlagerungswinkelwert in einer Referenzebene zu berechnen,
- ein Vergleichsmodul (36), das konfiguriert ist, um den berechneten Verlagerungswinkelwert mit dem entsprechenden Funknavigationssignal zu vergleichen, und
- ein Warnmodul (38), das konfiguriert ist, um abhängig von dem Resultat des Vergleichs zwischen dem berechneten Verlagerungswinkelwert und dem entsprechenden Funknavigationssignal ein Warnsignal zu erzeugen,

**dadurch gekennzeichnet, dass** das Berechnungsmodul (34) konfiguriert ist, um den Verlagerungswinkelwert abhängig von einer auf das Luftfahrzeug (10) bezogenen Größe aus einer Route und einer Steigung gemäß dem überwachten Funknavigationssignal zu berechnen, wobei die auf das Luftfahrzeug (10) bezogene Größe aus einer Avionikausrüstung (18, 20) stammt, die von der Empfangskette (32) verschieden ist,

wobei das überwachte Funknavigationssignal ein GLIDE-Signal ist, und das Berechnungsmodul (34) dann konfiguriert ist, um einen vertikalen Verlagerungswinkelwert in einer vertikalen Ebene abhängig von einer momentanen Route des Luftfahrzeugs (10) zu berechnen.

3. Vorrichtung (30) nach Anspruch 1 oder 2, wobei das Berechnungsmodul (34) konfiguriert ist, um den Verlagerungswinkelwert unabhängig von einer Positionsinformation einer Bodenbake zu berechnen, die geeignet ist, um das Funknavigationssignal auszusenden.

4. Vorrichtung (30) nach einem der vorherigen Ansprüche, wobei der Verlagerungswinkelwert in DDM ausgedrückt wird und das Berechnungsmodul (34) konfiguriert ist, um anhand einer Variablen, die von dem überwachten Funknavigationssignal und der einen Größe aus Straße und Steigung abhängt, eine lineare Abweichung zu berechnen und dann die lineare Abweichung in den Verlagerungswinkelwert umzuwandeln, der in DDM ausgedrückt wird.

5. Vorrichtung (30) nach Anspruch 4, wobei das Berechnungsmodul (34) konfiguriert ist, um eine Filterung aufeinanderfolgender Werte des überwachten Funknavigationssignals durchzuführen, und die von dem überwachten Funknavigationssignal abhängige Variable ein Mittelwert ist, der aus einer Filterung der Werte des überwachten Funknavigationssignals resultiert.

6. Vorrichtung (30) nach Anspruch 5, wobei die Vorrichtung (30) ferner ein zweites Vergleichsmodul (40) umfasst, das konfiguriert ist, um den Mittelwert, der aus der Filterung der Werte des überwachten Funknavigationssignals resultiert, mit einer zu der Achse der Landebahn hin vorhergesagten Größe aus einer vorhergesagten Route und einer vorhergesagten Neigung gemäß dem überwachten Funknavigationssignal zu vergleichen, wobei die vorhergesagte Größe aus einer an Bord des Luftfahrzeugs (10) befindlichen Datenbank stammt und die theoretischen Werte der überwachten Größen liefert.

7. Vorrichtung (30) nach einem der Ansprüche 4 bis 6, wobei das Berechnungsmodul (34) konfiguriert ist, um die lineare Abweichung zusätzlich abhängig von einer Integration einer in die Referenzebene projizierten Bodengeschwindigkeit des Luftfahrzeugs (10) zu berechnen.

8. Verfahren zur Überwachung mindestens eines Funknavigationssignals (LOC) in Annäherungsphase an eine Landebahn (12), wobei jedes Funknavigationssignal (LOC) von einer Empfangskette (32) an Bord eines Luftfahrzeugs (10) stammt,

    wobei das Verfahren von einer elektronischen Überwachungsvorrichtung (30) implementiert wird und Folgendes umfasst:

        - Berechnen (100, 110, 120; 200, 210, 220) eines Bewegungswinkelwerts in einer Referenzebene,
        - Vergleichen (130; 230) des berechneten Bewegungswinkelwerts mit dem entsprechenden Funknavigationssignal, und
        - Erzeugen (140; 240) eines Warnsignals abhängig von dem Resultat des Vergleichs zwischen dem berechneten Verlagerungswinkelwert und dem entsprechenden Funknavigationssignal,

        **dadurch gekennzeichnet, dass** die Berechnung (100, 110, 120; 200, 210, 220) des Bewegungswinkelwerts abhängig von einer auf das Luftfahrzeug (10) bezogenen Größe aus einer Route und einer Steigung gemäß dem überwachten Funknavigationssignal durchgeführt wird, wobei die auf das Luftfahrzeug (10) bezogene Größe aus einer Avionikausrüstung (18, 20) stammt, die von der Empfangskette (32) verschieden ist, wobei das überwachte Funknavigationssignal ein LOC-Signal ist, und bei der Berechnung (100, 110, 120; 200, 210, 220) ein seitlicher Bewegungswinkelwert in einer horizontalen Ebene abhängig von einer momentanen Route des Luftfahrzeugs (10) berechnet wird.

9. Verfahren zur Überwachung mindestens eines Funknavigationssignals (GLIDE) in Annäherungsphase an eine Landebahn (12), wobei jedes Funknavigationssignal (GLIDE) von einer Empfangskette (32) an Bord eines Luftfahrzeugs (10) stammt,

    wobei das Verfahren von einer elektronischen Überwachungsvorrichtung (30) implementiert wird und Folgendes umfasst:

        - Berechnen (100, 110, 120; 200, 210, 220) eines Bewegungswinkelwerts in einer Referenzebene,
        - Vergleichen (130; 230) des berechneten Bewegungswinkelwerts mit dem entsprechenden Funknavigationssignal, und
        - Erzeugen (140; 240) eines Warnsignals abhängig von dem Resultat des Vergleichs zwischen dem berechneten Verlagerungswinkelwert und dem entsprechenden Funknavigationssignal,

**dadurch gekennzeichnet, dass** die Berechnung (100, 110, 120; 200, 210, 220) des Bewegungswinkelwerts abhängig von einer auf das Luftfahrzeug (10) bezogenen Größe aus einer Route und einer Steigung gemäß dem überwachten Funknavigationssignal durchgeführt wird, wobei die auf das Luftfahrzeug (10) bezogene Größe aus einer Avionikausrüstung (18, 20) stammt, die von der Empfangskette (32) verschieden ist, wobei das überwachte Funknavigationssignal ein GLIDE-Signal ist, und bei der Berechnung (100, 110, 120; 200, 210, 220) ein vertikaler Bewegungswinkelwert in einer vertikalen Ebene abhängig von einer momentanen Steigung des Luftfahrzeugs (10) berechnet wird.

10. Computerprogramm, umfassend Softwareanweisungen, die, wenn sie von einem Computer ausgeführt werden, ein Verfahren nach einem der Ansprüche 8 bis 9 implementieren.

**Claims**

1. Electronic device (30) for monitoring at least one radionavigation signal (LOC) in the approach phase of a runway (12), each radionavigation signal (LOC) being obtained from a reception chain (32) on board an aircraft (10), the device (30) comprising:

   - a calculation module (34) configured to calculate an angular displacement value in a reference plane,
   - a comparison module (36) configured to compare the calculated angular displacement value with the corresponding radionavigation signal, and
   - a warning module (38) configured to generate a warning signal as a function of the result of the comparison between the calculated angular displacement value and the corresponding radionavigation signal,

   **characterized in that** the calculation module (34) is configured to calculate the angular displacement value as a function of a magnitude relating to the aircraft (10) among a course and a glide path, according to the monitored radionavigation signal, wherein the magnitude relating to the aircraft (10) originates from avionic equipment (18, 20) independently of the reception chain (32),
   the monitored radionavigation signal being an LOC signal, wherein the calculation module (34) is then configured to calculate a lateral angular displacement value in a horizontal plane according to an instantaneous course of the aircraft (10).

2. Electronic device (30) for monitoring at least one radionavigation signal (GLIDE) in the approach phase of a runway (12), each radionavigation signal (GLIDE) being obtained from a reception chain (32) on board an aircraft (10), the device (30) comprising:

   - a calculation module (34) configured to calculate an angular displacement value in a reference plane,
   - a comparison module (36) configured to compare the calculated angular displacement value with the corresponding radionavigation signal, and
   - a warning module (38) configured to generate a warning signal as a function of the result of the comparison between the calculated angular displacement value and the corresponding radionavigation signal,

   **characterized in that** the calculation module (34) is configured to calculate the angular displacement value as a function of a magnitude relating to the aircraft (10) among a course and a glide path, according to the monitored radionavigation signal, wherein the magnitude relating to the aircraft (10) originates from avionic equipment (18, 20) independently of the reception chain (32),
   the monitored radionavigation signal being an GLIDE signal, wherein the calculation module (34) is then configured to calculate a vertical angular displacement value in a vertical plane according to an instantaneous glide path of the aircraft (10).

3. Device (30) according to claim 1 or 2, wherein the calculation module (34) is configured to calculate the angular displacement value independently of position information of a ground beacon capable of transmitting the radio navigation signal.

4. Device (30) according to any one of the preceding claims, wherein the angular displacement value is expressed in DDM, and the calculation module (34) is configured to calculate a linear deviation based on a magnitude as a function of the monitored radionavigation signal and a magnitude relating to the aircraft course and glide path, then to convert the linear deviation into the angular displacement value expressed in DDM.

5. Device (30) according to claim 4, wherein the calculation module (34) is configured to perform a filtering of successive values of the monitored radionavigation signal, while the magnitude dependent on the monitored radionavigation signal is a mean value resulting from the filtering of the values of the monitored radionavigation signal.

6. Device (30) according to claim 5, wherein the device (30) further comprises a second comparison module (40) configured to compare the mean value resulting from the filtering of the values of the monitored radionavigation signal, with a predicted magnitude relating to the predicted course and the predicted glide slope towards the centerline of the runway according to the monitored radionavigation signal, wherein the predicted magnitude is obtained from a database on board the aircraft (10) and provides the theoretical values of the monitored magnitudes.

7. Device (30) according to any one of claims 4 to 6, wherein the calculation module (34) is configured to calculate the linear deviation as a further function of an integration of the ground speed of the aircraft (10) projected into the reference plane.

8. Method for monitoring at least one radionavigation signal (LOC) in the approach to a runway (12), each radionavigation signal (LOC) being derived from a reception chain (32) on board an aircraft (10), the method being effected by an electronic monitoring device (30), and comprising:

- the calculation (100, 110, 120, 200, 210, 220) of an angular displacement value in a reference plane,
- the comparison (130; 230) of the calculated angular displacement value with the corresponding radionavigation signal, and
- the generation (140; 240) of a warning signal as a function of the result of the comparison between the calculated angular displacement value and the corresponding radionavigation signal,

**characterized in that** the calculation (100, 110, 120; 200, 210, 220) of the angular displacement value is performed as a function of a magnitude relating to the aircraft (10) among a course and a glide path according to the monitored radionavigation signal, wherein the magnitude relating to the aircraft (10) is obtained from avionic equipment (18, 20) independently of the reception chain (32), the monitored radionavigation signal being an LOC signal, wherein during the calculation (100, 110, 120 ; 200, 210, 220), a lateral angular displacement value is calculated in a horizontal plane according to an instantaneous course of the aircraft (10).

9. Method for monitoring at least one radionavigation signal (GLIDE) in the approach to a runway (12), each radionavigation signal (GLIDE) being derived from a reception chain (32) on board an aircraft (10), the method being effected by an electronic monitoring device (30), and comprising:

- the calculation (100, 110, 120, 200, 210, 220) of an angular displacement value in a reference plane,
- the comparison (130; 230) of the calculated angular displacement value with the corresponding radionavigation signal, and
- the generation (140; 240) of a warning signal as a function of the result of the comparison between the calculated angular displacement value and the corresponding radionavigation signal,

**characterized in that** the calculation (100, 110, 120; 200, 210, 220) of the angular displacement value is performed as a function of a magnitude relating to the aircraft (10) among a course and a glide path according to the monitored radionavigation signal, wherein the magnitude relating to the aircraft (10) is obtained from avionic equipment (18, 20) independently of the reception chain (32), the monitored radionavigation signal being an GLIDE signal, wherein during the calculation (100, 110, 120 ; 200, 210, 220), a vertical angular displacement value is calculated in a vertical plane according to an instantaneous glide path of the aircraft (10).

10. Computer program comprising software instructions which, when executed by a computer, implement a method according to claim 8 or 9.

FIG.1

FIG.2

FIG.3

FIG.4

Détection alignement horizontal — 100

Identification de la direction d'approche — 110

Calcul de l'écart de route latéral et
conversion de l'écart calculé en DDM — 120

Surveillance du signal LOC — 130

Génération éventuelle d'un signal d'alerte relatif au signal LOC — 140

FIG.5

| Détection alignement vertical | 200 |
| ↓ | |
| Identification de la pente d'approche | 210 |
| ↓ | |
| Calcul de l'écart de pente vertical et conversion de l'écart calculé en DDM | 220 |
| ↓ | |
| Surveillance du signal GLIDE | 230 |
| ↓ | |
| Génération éventuelle d'un signal d'alerte relatif au signal GLIDE | 240 |

## FIG.6

FIG.7

ART ANTERIEUR

FIG.8

## FIG.9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 8630756 B2